# FASCICULE DE BREVET EUROPEEN

(11) **EP 1 089 203 B1**
(45) Date de publication et mention de la délivrance du brevet: **20.08.2008**
(21) Numéro de dépôt: 00402653.0
(22) Date de dépôt: 26.09.2000
(51) Int. Cl.: G06F 17/40, G11B 20/10, H03K 5/19, G11B 20/14

(54) **Procédé et dispositif d'extraction de données binaires véhiculées par un signal incident, en particulier un signal issu d'un disque numérique**
Verfahren und Vorrichtung zur Extrahierung von binären Daten aus einem Eingangssignal, insbesondere ein Signal von einer digitalen Platte
Method and device for extracting binary data from an input signal, in particular a signal from a digital disk

(30) Priorité: 30.09.1999 FR 9912199
(43) Date de publication de la demande: 04.04.2001
(73) Titulaire: STMicroelectronics S.A., 92120 Montrouge (FR)
(72) Inventeur: Lebowsky, Fritz, 38410 Corps d'Uriage (FR)
(74) Mandataire: Casalonga, Axel

(56) Documents cités:
- EP-A- 0 727 782
- EP-A- 0 918 396
- US-A- 4 495 474
- PATENT ABSTRACTS OF JAPAN vol. 1999, no. 10, 31 août 1999 (1999-08-31) & JP 11 134817 A (SHARP CORP), 21 mai 1999 (1999-05-21)

## Description

L'invention concerne l'extraction de données binaires véhiculées par un signal incident, en particulier un signal incident issu d'un support mobile en rotation.

L'invention s'applique avantageusement mais non limitativement à des disques numériques, notamment ceux connus sous le vocable de "disque compact" (CD-ROM : Read Only Memory Compact Disc en langue anglaise) et tout particulièrement les disques numériques multifonction (DVD : "Digital Versatile Disc" en langue anglaise) stockant de façon comprimée des données d'image.

Un disque numérique comporte une seule piste en spirale dont le relief est représentatif des informations binaires stockées sur la piste du disque. On éclaire par un faisceau optique incident, par exemple un spot laser, la piste du disque et plusieurs photodétecteurs, par exemple quatre, détectent la réflexion du faisceau lumineux sur le disque.

Le capteur optique formé des photodétecteurs fournit alors, d'une part quatre signaux élémentaires respectivement délivrés par les quatre photodétecteurs, et qui sont utilisés également pour effectuer un asservissement du faisceau optique sur la piste du disque, et d'autre part un signal global, ou signal utile, égal à la somme des quatre signaux élémentaires, signal utile d'où l'on extrait des informations binaires lues sur la piste.

Le codage des informations binaires sur le disque est normalisé et bien connu de l'homme du métier (codage RLL (2,10) par exemple). Plus précisément, la longueur des creux et des bosses présents sur la piste en spirale du disque détermine le nombre de valeurs logiques 0 encadrant deux valeurs logiques 1. Et, ces longueurs de creux et de bosses sont toutes multiples d'une longueur de base communément désignée par l'homme du métier sous le vocable 1 T. A titre indicatif, la valeur de la longueur de base 1 T est égale à 0,64 micron pour un disque DVD et à 1,6 micron pour un CD-ROM.

Lorsque le disque numérique est en rotation, le signal utile contenant les données binaires, ci-après également désigné "signal incident", comporte une succession de transitions dont les espacements sont représentatifs des longueurs desdites impulsions. Et, plus la vitesse de rotation du disque est élevée, plus les espacements entre les transitions sont réduits.

Le principe général pour extraire les données binaires véhiculées par le signal incident, consiste alors à détecter les transitions du signal incident, à calculer les distances séparant les transitions successives et à déterminer les valeurs des données à partir des distances calculées.

Actuellement, on utilise une boucle numérique à verrouillage de phase qui utilise, pour chaque vitesse de rotation, une valeur prédéfinie d'une distance de base correspondant à ladite longueur de base (1T, encore appelée "période 1T"). Par ailleurs, une boucle à verrouillage de phase comporte généralement un filtre numérique. Et, dans le cas présent, les coefficients du filtre dépendent de la vitesse de rotation.

Bien entendu, en fonction de la distance de la portion de piste par rapport au centre du disque, la vitesse linéaire de rotation de cette portion est différente. Aussi, lorsque le faisceau laser est commandé, par le microprocesseur d'un ordinateur par exemple, pour effectuer un saut de déplacement d'une portion de piste vers une autre portion de piste située par exemple plus à l'extérieur du disque, le verrouillage correct de la boucle à verrouillage de phase nécessite d'utiliser la valeur mémorisée prédéfinie de la distance de base (1T) qui correspond à cette nouvelle valeur linéaire de rotation et de modifier les coefficients du filtre en utilisant également un jeu préprogrammé de coefficients qui correspond à cette vitesse de rotation. Cependant, si une erreur de positionnement est commise, c'est-à-dire si l'information donnée par le photodétecteur conduit à une mauvaise localisation réelle de la portion de piste, et donc à une mauvaise estimation de la nouvelle vitesse linéaire de rotation, la boucle à verrouillage de phase va utiliser une valeur inadaptée pour la nouvelle période 1T, ainsi qu'un jeu inadapté de coefficients du filtre. Et, ceci peut conduire à un verrouillage beaucoup plus long de la boucle à verrouillage de phase, et par conséquent à un temps de latence beaucoup plus important avant de pouvoir extraire des données correctes. Dans le pire des cas, le verrouillage ne s'effectue pas et le disque est alors éjecté du support.

L'invention vise à apporter une solution plus satisfaisante à ces problèmes.

L'invention propose donc un procédé d'extraction de données binaires véchiculées par un signal incident, lesdites données binaires étant codées sous la forme d'un signal impulsionnel dont les impulsions ont des longueurs variables et toutes multiples d'une longueur impulsionnelle de base (période 1T). Le signal incident comporte une succession de transitions dont les espacements sont représentatifs des longueurs desdites impulsions. On détecte les transitions du signal incident, on calcule les distances séparant les transitions successives, et on détermine les valeurs des données à partir des distances calculées.

Selon une caractéristique générale de l'invention, le procédé comprend une phase d'initialisation dans laquelle on détermine à partir du contenu du signal incident la valeur d'une distance de base (1T) correspondant à ladite longueur impulsionnelle de base (1T).

Le procédé comporte également une phase d'extraction dans laquelle on élabore un jeu de valeurs de référence correspondant respectivement à différents multiples de la distance de base déterminée (1T, 2T, ..., 14T dans le cas d'un disque DVD). Il est même envisagé dans certains cas de stocker une valeur de référence nulle correspondant à OT. Pour une distance courante calculée, on détermine les valeurs des données correspondant à cette distance courante à partir d'une comparaison entre les valeurs de référence et une distance corrigée courante, cette distance corrigée courante étant élaborée à partir de la distance calculée courante, d'une erreur de comparaison relative à la distance calculée précédente et de l'erreur de comparaison filtrée.

En d'autres termes, une première caractéristique essentielle de l'invention consiste à estimer la valeur de la distance de base (1T) à partir du contenu même du signal incident, ce qui prend donc en compte intrinsèquement la vitesse de rotation, alors que dans l'art antérieur on avait prédéfini et préprogrammé des valeurs pour cette distance de base en fonction des différentes valeurs de rotation possibles du disque.

Par ailleurs, une autre caractéristique essentielle de l'invention consiste, dans la phase d'extraction, à corriger l'erreur de phase directement sur les transitions détectées du signal, c'est-à-dire au rythme des transitions détectées, et non plus au rythme de la fréquence d'échantillonnage du signal comme c'était le cas dans l'art antérieur. De ce fait, les coefficients du filtre de la boucle à verrouillage de phase selon l'invention, deviennent indépendants de la vitesse de rotation du disque et ne dépendent que des caractéristiques physiques du disque comme par exemple les imprécisions de gravage de la piste. De ce fait, la correction de l'erreur de phase est beaucoup plus efficace et rapide et, par conséquent, la durée de latence pour obtenir des données binaires extraites correctes s'en trouve particulièrement réduite.

L'estimation de la période 1T s'effectue avantageusement de façon algébrique.

Plus précisément, selon un mode de mise en oeuvre de l'invention, la phase d'initialisation comprend au moins une première sous-phase comportant l'élaboration d'au moins une première distance-seuil élaborée à partir de la distance calculée maximale courante et correspondant à une première longueur-seuil (par exemple 3,5T) située entre un premier (3T) et un deuxième (4T) multiples successifs de la longueur de base (1T). Cette première sous-phase comporte également la comparaison de chaque distance calculée courante avec ladite première distance-seuil, la sommation d'un premier nombre prédéterminé (par exemple 21) de valeurs de distances calculées courantes inférieures à ladite première distance-seuil (3,5T). La première sous-phase comporte également la division de la somme ainsi obtenue par un premier diviseur prédéterminé (par exemple 64) de façon à obtenir une valeur estimée de ladite distance de base (1T).

Une telle phase d'initialisation permet une estimation très rapide de la valeur de la période 1T, typiquement au bout d'une durée au plus égale à deux trames, c'est-à-dire 120 microsecondes pour une vitesse de rotation de 1 x (une vitesse de rotation de 1 x correspondant à 4 m/seconde). En effet, il a été observé que 70% des valeurs logiques des données transmises correspondaient à des multiples 3T et 4T. Et, la combinaison des caractéristiques particulières de cette phase d'initialisation, avec l'estimation de la valeur de la période 1T à partir du contenu réel du signal incident, permet d'obtenir cette rapidité d'estimation.

Si l'on souhaite obtenir davantage de précision sur la valeur estimée de ladite distance de base obtenue (correspondant à la valeur de la période 1T), il est alors préférable que la phase d'initialisation comprenne une deuxième sous-phase, postérieure à la première sous-phase, dans laquelle on élabore à partir de la valeur de la distance de base obtenue à l'issue de la première sous-phase, une deuxième distance-seuil et une troisième distance-seuil supérieures à la deuxième distance-seuil, les deuxième et troisième distance-seuils correspondant respectivement à une première longueur-seuil (18T/4) et à une deuxième longueur-seuil (14T/4) encadrant ledit deuxième multiple (4T) de la longueur de base. On compare alors chaque distance calculée courante avec ladite deuxième distance-seuil et avec la troisième distance-seuil. On somme un deuxième nombre prédéterminé de valeurs de distances calculées courantes (par exemple 32 valeurs) qui sont comprises entre ladite deuxième distance-seuil et ladite troisième distance-seuil. Et on divise la somme obtenue par un deuxième diviseur prédéterminé (par exemple 128) de façon à obtenir une nouvelle valeur estimée de ladite distance de base (1T).

Une telle variante de mise en oeuvre permet également d'estimer la valeur de la période 1T lorsque le signal ne contient aucune distance correspondant à des valeurs 3T.

Selon un mode de mise en oeuvre de l'invention, dans la phase d'extraction, les valeurs de référence comportent respectivement tous les multiples entiers de la distance de base déterminée (1T) compris entre la distance de base et le multiple maximum de cette distance de base correspondant au multiple maximum (par exemple 14 dans le cas d'un DVD et 11 dans le cas d'un CD-ROM) de la longueur de base susceptible d'être contenue dans le signal incident. En d'autres termes, dans le cas d'un DVD, on stockera comme valeurs de référence les valeurs de 1T à 14T. On effectue alors la différence entre la distance corrigée courante et les valeurs de réféfence et on sélectionne la différence minimale comprise dans une plage de comparaison prédéterminée (par exemple ]-0,5T, +0,5T[). La longueur de l'impulsion codant les valeurs des données correspondant à la distance calculée courante, est alors le multiple de la longueur de base associée à la valeur de référence ayant conduit à ladite différence minimale sélectionnée.

Généralement, le signal impulsionnel comporte des impulsions de synchronisation dont les occurences sont mutuellement espacées d'une longeur de synchronisation égale à un quatrième multiple prédéterminé de la longueur de base (par exemple dans le cas d'un DVD, les impulsions de synchronisation ont une longueur de 14T et leurs occurences temporelles sont séparées d'une distance de 1488T). Deux impulsions de synchronisation encadrent un flot d'impulsions de longueurs variables codant un flot de données.

Dans un mode de mise en oeuvre de l'invention, dans la phase d'extraction, on effectue un contrôle de la valeur de la distance de base (1T) à partir de la détection des impulsions de synchronisation successives et des contenus du signal incident situés entre deux occurences successives d'une impulsion de synchronisation.

Ainsi, ceci offre un contrôle supplémentaire de la bonne estimation de la valeur de la longueur de base (1T).

Plus précisément, selon un mode de mise en oeuvre, on détecte les distances calculées correspondant aux impulsions de synchronisation. On effectue la somme des multiples correspondant aux distances calculées délivrées depuis l'occurence d'une impulsion de synchronisation jusqu'à l'occurence de l'impulsion de synchronisation suivante, et si cette somme se situe dans un voisinage prédéterminé du quatrième multiple (1488 dans le cas d'un DVD), c'est-à-dire si par exemple elle se situe entre 1474 et 1503, on divise alors la somme des distances calculées ayant été délivrées entre deux occurences, par le quatrième multiple (1488), de façon à obtenir une nouvelle valeur estimée de la distance de base (1T).

L'invention a également pour objet un dispositif d'extraction de données binaires véhiculées par un signal incident, lesdites données binaires étant codées sous la forme d'un signal impulsionnel dont les impulsions ont des longueurs variables et toutes multiples d'une longueur impulsionnelle de base, le signal incident comportant une succession de transitions dont les espacements sont représentatifs des longueurs desdites impulsions. Le dispositif comprend une entrée pour recevoir le signal incident, des moyens de détection aptes à détecter les transitions du signal incident, des moyens de calcul aptes à calculer les distances séparant les transitions successives, et des moyens de traitement aptes à déterminer les valeurs des données à partir des distances calculées.

Selon une caractéristique générale de l'invention, les moyens de traitement comprennent :
- des moyens de prétraitement aptes à déterminer à partir du contenu du signal incident la valeur d'une distance de base correspondant à ladite longueur impulsionnelle de base et à stocker cette valeur dans un registre,
- des moyens d'extraction comportant des moyens d'élaboration d'un jeu de valeurs de référence correspondant respectivement à différents multiples de la distance de base (1T) stockée dans le registre, et des moyens formant boucle de correction aptes pour une distance courante calculée, à déterminer les valeurs des données correspondant à cette distance courante à partir d'une comparaison entre les valeurs de référence (1T à 14T, par exemple) et une distance corrigée courante élaborée à partir de la distance calculée courante, d'une erreur de comparaison relative à la distance calculée précédente et de l'erreur de comparaison filtrée, et
- des moyens de commande aptes à activer les moyens de prétraitement puis les moyens d'extraction.

Selon un mode de réalisation de l'invention, la boucle de correction comporte :
- un premier moyen apte à effectuer la différence entre la distance corrigée courante et chacune des valeurs de référence (1T-14T, par exemple),
- un deuxième moyen apte à sélectionner la différence minimale comprise dans une plage de comparaison prédéterminée (par exemple ]-0,5T, +0,5T[),
- un filtre connecté à la sortie du deuxième moyen,
- un moyen correcteur possédant une première entrée pour recevoir chaque distance calculée courante, une deuxième entrée connectée à la sortie du deuxième moyen par l'intermédiaire d'un premier moyen de retard, une troisième entrée connectée à la sortie du filtre par l'intermédiaire d'un deuxième moyen de retard, et une sortie connectée à une entrée du premier moyen et délivrant ladite distance corrigée courante égale à la somme de la distance calculée courante et de ladite différence minimale et diminuée de la valeur de sortie délivrée par le filtre.

Par ailleurs, la boucle de correction est cadencée au rythme des transitions du signal incident.

Lorsque le signal impulsionnel comporte des impulsions de synchronisation dont les occurences sont mutuellement espacées d'une longueur de synchronisation égale à un multiple prédéterminé (par exemple 1488) de la longueur de base (1T), deux impulsions de synchronisation encadrant un flot d'impulsions de longueur variable codant un flot donné, il est particulièrement avantageux que les moyens d'extraction comportent des moyens de contrôle aptes à contrôler la valeur de la distance de base (1T) à partir de la détection des impulsions de synchronisation successives (14T, par exemple) et du contenu du signal incident situé entre deux occurences successives d'une impulsion de synchronisation.

Selon un mode de réalisation de l'invention, les moyens de prétraitement comportent :
- des moyens d'élaboration aptes à élaborer au moins une première distance-seuil à partir de la distance calculée maximale courante et correspondant à une première longeur-seuil située entre un premier (3, par exemple) et un deuxième (4 par exemple) multiples successifs de la longueur de base (1T),
- des moyens de comparaison aptes à comparer chaque distance calculée courante avec ladite première distance-seuil,
- des moyens de sommation aptes à sommer un premier nombre prédéterminé (par exemple 21) de valeurs de distances calculées courantes inférieures à ladite première distance-seuil (3,5T, par exemple), et
- un moyen diviseur apte à diviser la somme obtenue par un premier diviseur prédéterminé (par exemple 64) de façon à obtenir une valeur estimée de ladite distance de base (1T).

L'invention a également pour objet un lecteur de disque numérique, par exemple un disque DVD, incorporant un dispositif d'extraction de données tel que défini ci-avant.

D'autres avantages et caractéristiques de l'invention apparaîtront à l'examen de la description détaillée de modes de réalisation et de mises en oeuvre, nullement limitatifs, et des dessins annexés, sur lesquels :
- la figure 1 illustre un exemple de codage de données sous la forme d'un signal impulsionnel;
- la figure 2 illustre un flot de données encadré par deux impulsions de synchronisation du type de celles présentes sur un disque DVD;
- la figure 3 illustre un signal incident dont on souhaite extraire les données binaires qu'il véhicule;
- la figure 4 illustre de façon très schématique un mode de réalisation d'un dispositif selon l'invention, par exemple incorporé dans un lecteur de disque DVD référencé LDVD sur cette figure;
- les figures 5 et 6 illustrent deux modes de mise en oeuvre d'une phase d'initialisation du procédé selon l'invention, permettant une estimation de la valeur de la longueur de base 1T; et
- la figure 7 illustre un contrôle de l'estimation de cette longueur de base 1T, en utilisant des impulsions de synchronisation successives.

Bien que l'invention n'y soit pas limitée, on va maintenant décrire des modes de réalisation et de mise en oeuvre concernant plus particulièrement les lecteurs de disque DVD.

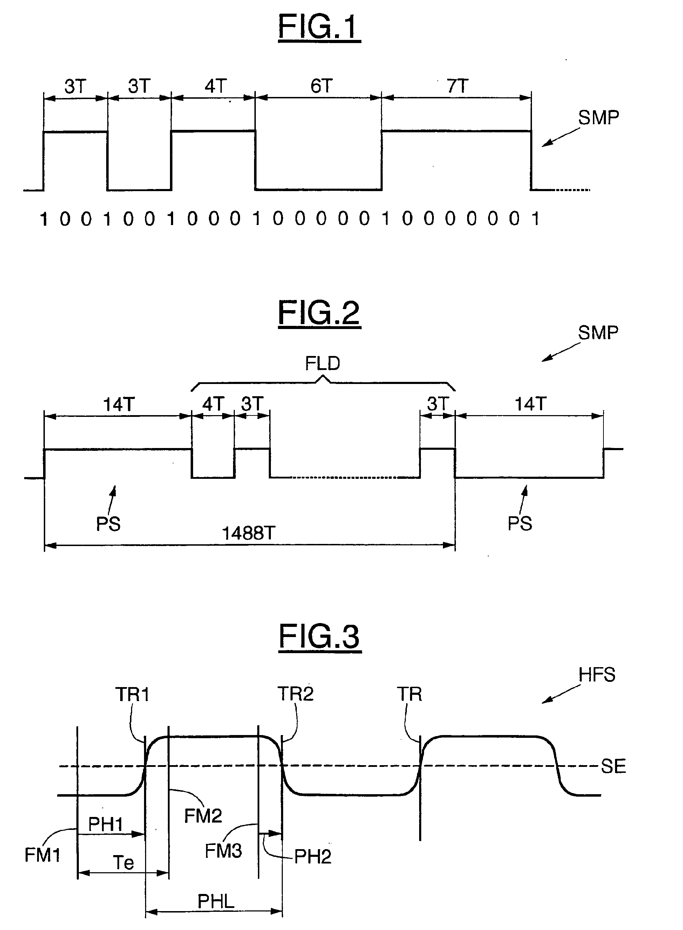

La figure 1 illustre schématiquement un signal impulsionnel SMP représentatif du relief en creux et en bosse de la piste en spirale d'un disque. D'une façon classique et connue par l'homme du métier, les longueurs des creux et des bosses définissent le codage des valeurs binaires. Et, ces longueurs sont toutes multiples d'une longueur impulsionnelle de base que l'on dénomme dans la suite 1T. A titre indicatif, la longueur 1T est égale à 0,64 micron dans le cas d'un disque DVD.

Le multiple de cette longueur de base (encore dénommée "période 1T"), représente le nombre de valeurs logiques 0 entre deux valeurs logiques 1. Ainsi, une longueur 3T code les valeurs binaires 1001, tandis qu'une longueur 6T code les valeurs binaires 1000001. On parle alors de codage RLL (p, q), p et q désignant les nombres minimum et maximum de zéros que l'on a codés. Ainsi, une valeur RLL égale à 2 correspond à une longueur 3T et à 2 "zéros" encadrés par deux "1".

Dans un disque DVD, le flot FLD de données binaires (figure 2) qui comporte des impulsions de longueurs variables et pouvant varier de 3T jusqu'à 11T, est encadré par deux impulsions de synchronisation PS ayant une longueur prédéterminée égale à 14T. Par ailleurs, la distance entre les occurences successives de deux impulsions de synchronisation, c'est-à-dire la distance entre le début d'une impulsion de synchronisation et le début de l'impulsion de synchronisation suivante, est également fixée et est égale à 1488 T.

Comme illustré sur la figure 3, le signal utile ou signal incident HFS, contenant les données binaires et délivré par les photodétecteurs, comporte une succession de transitions TR. Ces transitions représentent le franchissement d'un seuil prédéterminé SE, par exemple la valeur 0. Le principe de l'extraction des données va consister à détecter les transitions successives, à calculer les distances PHL séparant deux transitions successives TR1, TR2 par exemple, et à déterminer les valeurs des données à partir de ces distances calculées.

Le signal incident HFS est échantillonné à une fréquence d'échantillonnage Fe correspondant à une période d'échantillonnage Te séparant des fronts montants successifs FM1, FM2 du signal d'horloge d'échantillonnage.

La référence PH1 désigne l'écart temporel, ou phase, séparant la transition TR1 du front montant FM1, tandis que la référence PH2 désigne la phase séparant la transition TR2 du front montant FM3. La distance PHL correspond donc à une différence ou "longueur" de phase entre les deux transitions.

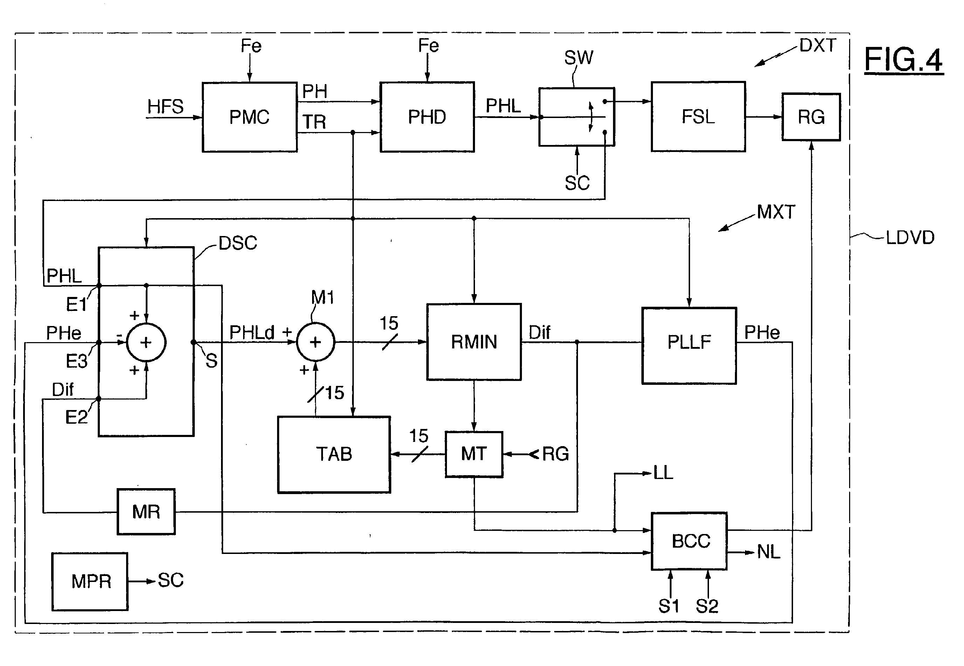

Matériellement, comme illustré sur la figure 4, le signal incident HFS est reçu dans des moyens PMC formant une première boucle numérique à verrouillage de phase, de structure connue en soi. Cette boucle numérique PMC reçoit le signal HFS égalisé après passage dans un égaliseur, également de structure connue en soi. La boucle PMC utilise le signal d'horloge d'échantillonnage (fréquence Fe) délivré par exemple par un quartz (non représenté ici à des fins de simplification).

Les moyens PMC élaborent un signal d'échantillonnge auxiliaire dont la période est égale à Te/n où Te est la période du signal d'horloge d'échantillonnage et n un entier. Ces moyens PMC détectent toute transition du signal HFS par rapport au seuil SE et déterminent dans quel intervalle du signal d'échantillonnage auxiliaire se situe ladite transition.

Plus précisément, les moyens PMC délivrent en sortie un mot numérique représentatif de l'écart ou phase PH entre toute transition détectée du signal HFS et le front montant (FM1 par exemple) du signal d'horloge immédiatement précédent.

En pratique, à titre d'exemple, si la boucle à verrouillage de phace PMC comporte typiquement 32 inverseurs permettant de subdiviser la période Te du signal d'horloge d'échantillonnage en 32 intervalles (n=32), les moyens PMC vont délivrer un mot de 5 bits représentant le numéro de l'intervalle dans lequel se situe la transition, c'est-à-dire en fait l'écart PH entre le front montant du signal d'horloge d'échantillonnage et la transition du signal. Ainsi, un mot numérique égal à 00000 sera représentatif d'une transition en phase avec le front montant du signal d'horloge, tandis qu'un mot numérique égal à 11111 sera représentatif d'une transition se situant juste avant le front montant suivant du signal d'horloge.

Les différentes valeurs des phases sont transmises à un moyen PHD calculant une distance courante PHL entre deux transitions successives du signal, c'est-à-dire la différence de phase entre les deux transitions. L'obtention de cette distance calculée courante PHL s'effectue très simplement en connaissant la valeur de la période d'échantillonnage Te ainsi que les valeurs des phases PH1 et PH2.

Le bloc suivant du dispositif d'extraction selon l'invention DXT est représenté schématiquement sous la forme d'un commutateur SW commandé par un signal de commande SC issu de moyens de commande de niveau supérieur, par exemple incorporés dans un microprocesseur MPR. En fait, ce bloc SW, bien qu'il puisse ne pas être matériellement réalisé, est là pour illustrer les différentes phases du procédé d'extraction de données selon l'invention.

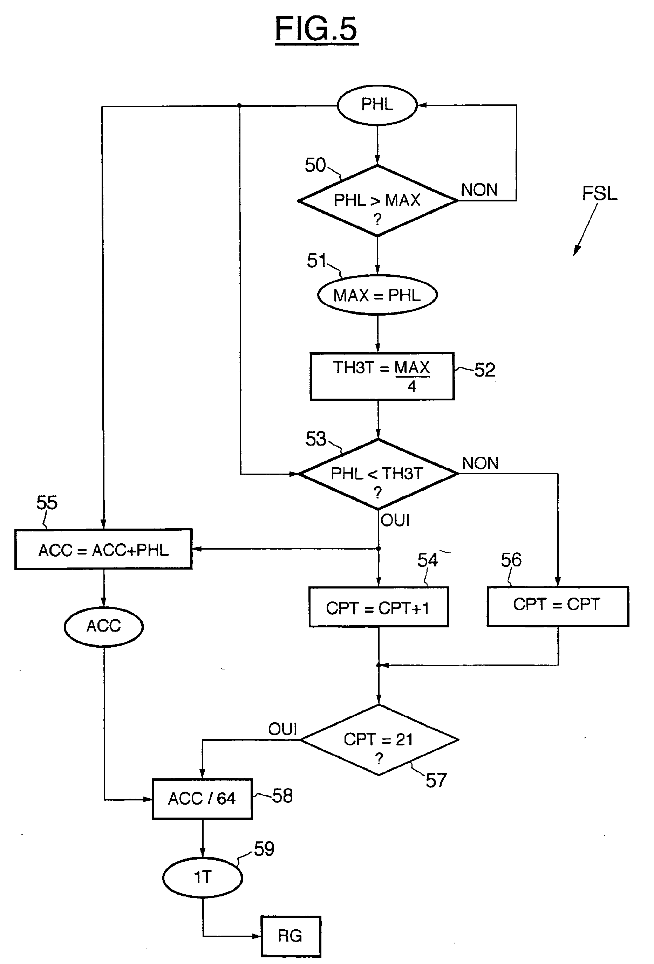

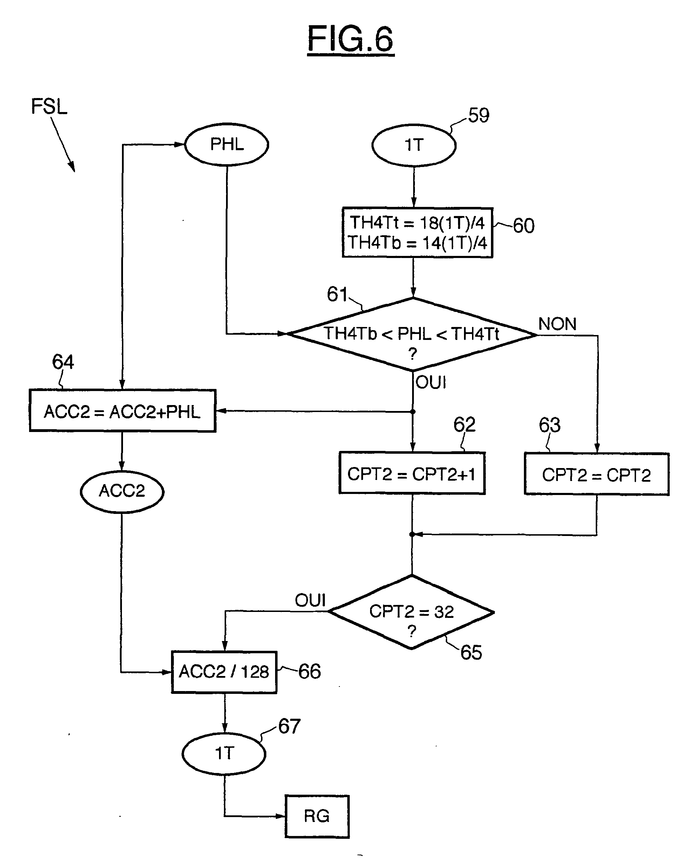

En effet, il est prévu après la mise sous tension du dispositif DXT, une phase d'initialisation dans laquelle on détermine à partir du contenu du signal incident la valeur d'une distance de base correspondant à ladite longueur impulsionnelle de base (1T). C'est le rôle des moyens de prétraitement FSL dont on va maintenant décrire des modes de fonctionnement en se référant plus particulièrement aux figures 5 et 6.

La fonction de ces moyens de prétraitement FSL est de fournir en un temps extrêmement court, par exemple sur une durée de deux trames, une estimation de la distance de base (1T) correspondant à la longueur impulsionnelle de base (1T). Cette valeur de la distance de base 1T obtenue à partir du contenu du signal incident sera ensuite stockée dans un registre RG (figure 4) pour être utilisée par les moyens d'extraction MXT qui vont permettre de décoder les données binaires véhiculées par le signal incident.

La figure 5 correspond en fait à une première sous-phase d'initialisation dans laquelle on va estimer de façon algébrique une valeur de ladite distance de base 1T à partir d'un certain nombre de distances calculées correspondant à des longueurs 3T.

Plus précisément, on va tout d'abord élaborer en temps réel une première distance-seuil TH3T correspondant à une première longueur-seuil (3,5T) située entre deux multiples successifs de la longueur de base (en l'espèce située entre 3T et 4T).

Et, cette élaboration de la première distance-seuil TH3T va s'effectuer de façon automatique à partir de la distance calculée maximale courante.

Plus précisément, dans une étape 50, on compare la distance calculée courante PHL délivrée par les moyens PHD à un nombre MAX stocké par exemple dans un registre et initialement égal à 0.

Si la distance calculée courante PHL est supérieure au nombre MAX, alors le nombre MAX prend la valeur de la distance calculée courante PHL (étape 51).

Dans l'étape 52, on détermine la première distance-seuil TH3T en effectuant la division du nombre MAX par quatre. Dans le cas présent, puisqu'il s'agit d'un disque DVD, on s'attend à obtenir un nombre MAX correspondant à une distance équivalente à une longueur de 14T qui est la longueur maximale que l'on peut rencontrer sur un disque DVD.

Dans l'étape 53, on compare la distance calculée courante PHL à la première distance-seuil TH3T. Le résultat de cette comparaison va conditionner l'incrémentation ou non d'un compteur CPT ayant initialement la valeur 0.

Plus précisément, si la distance calculée courante PHL est supérieure ou égale à la première distance-seuil TH3T, alors la valeur du compteur ne bouge pas (étape 56).

Par contre, si la distance calculée courante PHL est inférieure à la première distance-seuil TH3T, alors on incrémente le compteur d'une unité (étape 54). Dans le même temps, on ajoute à la valeur ACC d'un accumulateur, initialement à 0, la valeur de cette distance calculée courante PHL (étape 55).

L'homme du métier aura noté que la comparaison effectuée à l'étape 53 conduira en pratique aux étapes 54 et 55, si la distance calculée courante PHL correspond à une longueur 3T et si la première distance-seuil TH3T a été obtenue à partir d'une distance PHL correspondant à une longueur de 14T.

En d'autres termes, le compteur CPT ne sera alors incrémenté qu'à chaque fois qu'il y aura eu une détection d'une distance courante calculée PHL correspondant à une longueur 3T.

On comptabilise alors le nombre de fois où l'on a détecté une distance calculée courante PHL correspondant en théorie à une longueur 3T et, lorsque la valeur du compteur CPT atteint le nombre 21 (étape 57), on divise alors le contenu de l'accumulateur ACC par 64 (étape 58).

Puisque chaque distance calculée courante PHL ayant conduit à l'incrémentation du compteur CPT, correspond en fait à une longueur 3T, la somme de ces 21 valeurs correspond donc en théorie à une longueur de 21x3T, c'est-à-dire 63T. La division par 64 de la valeur de l'accumulateur ACC donne donc une bonne estimation, à 63/64 près, de la distance de base 1T (étape 59) correspondant à la longueur théorique 1T.

Cette valeur obtenue pour la distance 1T est ensuite stockée dans le registre RG.

Bien entendu, pour augmenter encore la précision, on aurait pu choisir un nombre de distances PHL inférieures au seuil TH3T égal à un multiple entier r de 21. Dans ce cas, il aurait fallu diviser le contenu de l'accumulateur ACC dans l'étape 58 par 64 r.

L'homme du métier aura donc noté que cette première sous-phase d'initialisation, illustrée sur la figure 5, a permis d'obtenir une estimation de la valeur de la distance de base 1T à partir des distances 3T du signal incident.

Cette première sous-phase d'initialisation peut être complétée éventuellement par une deuxième sous-phase illustrée sur la figure 6 et qui va permettre de fournir une nouvelle valeur estimée de la distance de base 1T, avec une précision encore plus accrue, et cette fois-ci à partir des distances 4T du signal incident.

A cet égard, on élabore à partir de la valeur de la distance de base 1T obtenue à l'issue de la première sous-phase (référencée 59 sur la figure 5 et sur la figure 6) une deuxième distance-seuil TH4Tb et une troisième distance-seuil TH4Tt. La deuxième distance-seuil est égale à 14 fois la valeur 1T obtenue à l'étape 59 divisée par 4, tandis que la troisième distance-seuil est égale à 18 fois la valeur 1T obtenue à l'étape 59 divisée par 4 (étape 60).

On voit donc que les deuxième et troisième distance-seuils sont théoriquement égales à 3,5T et 4,5T. Elles encadrent donc un deuxième multiple de la longueur de base 1T, c'est-à-dire qu'elles encadrent le multiple 4.

Dans l'étape 61, on effectue une comparaison de la distance calculée courante PHL vis-à-vis de chacune de ces deuxième et troisième distance-seuils. Si la distance calculée courante PHL n'est pas comprise strictement entre ces deux distance-seuils, alors un deuxième compteur CPT2, initialement égal à 0, n'est pas incrémenté (étape 63).

Dans le cas contraire, le compteur CPT2 est incrémenté d'une unité (étape 62) et, parallèlement, un deuxième accumulateur ACC2, initialement à 0, est augmenté de la valeur de la distance calculée courante PHL.

Lorsque le compteur CPT2 atteint un deuxième nombre prédéterminé, en l'espèce 32 (étape 65), on divise le contenu de l'accumulateur ACC2 par 128 (étape 66), ce qui permet d'obtenir une nouvelle valeur pour la distance de base 1T (étape 67).

L'homme du métier aura noté ici que, puisque les distances calculées courantes PHL ayant conduit aux étapes 62 et 64 correspondent en théorie à des distances 4T, et que l'on comptabilise 32 valeurs, le contenu de l'accumulateur correspond donc en final à 32x4T c'est-à-dire 128T.

La valeur 1T obtenue à partir des distances 4T est donc plus précise que celle obtenue à l'étape 59, c'est-à-dire après la première sous-phase d'initialisation illustrée sur la figure 5.

Bien entendu, là encore, on aurait pu utiliser un multiple m de 32 pour la valeur du compteur CPT2 moyennant une division par 128 m dans l'étape 66.

D'un point de vue matériel, outre les éléments tels que des compteurs, des sommateurs, des accumulateurs qui viennent d'être évoqués pour la mise en oeuvre de la phase d'initialisation, les moyens de prétraitement FSL seront aisément réalisés par synthèse logique compte tenu des algorithmes qui viennent d'être décrits en référence aux figures 5 et 6.

Une fois que la valeur de la distance 1T a été estimée et stockée dans le registre RG (figure 4), les moyens de contrôle de niveau supérieur commutent le commutateur SW sur son autre sortie de façon à activer les moyens d'extraction de données MXT que l'on va maintenant décrire en se référant à nouveau plus particulièrement à la figure 4.

Ces moyens d'extraction de données MXT vont permettre de décoder les données véhiculées par le signal incident en utilisant la valeur estimée de la distance de base 1T stockée dans le registre RG.

Pour ce faire, les moyens d'extraction MXT comportent des moyens MT aptes à élaborer un jeu de quatorze valeurs de référence correspondant respectivement à tous les multiples entiers de la distance de base déterminée (1T) compris entre cette distance de base et le multiple maximum de cette distance de base correspondant au multiple maximum de la longueur de base susceptible d'être contenu dans le signal incident. Ainsi, dans le cas d'un DVD, on stockera comme valeurs de référence dans une mémoire TAB les quatorze valeurs de référence correspondant respectivement au produit de la distance de base estimée 1T et stockée dans le registre par les nombres entiers 1 à 14. On stockera également la valeur 0 comme quinzième valeur de référence, de façon à pouvoir éventuellement accrocher, lors d'un déphasage important, la plage de comparaison égale à -0,5 fois la valeur 1T stockée dans le registre et +0,5 fois la valeur 1T stockée dans le registre RG. Cette plage de référence est stockée dans une mémoire des moyens RMIN.

Outre les moyens d'élaboration MT et TAB qui viennent d'être décrits, les moyens d'extraction MXT comportent des moyens formant une boucle de correction qui comporte un moyen correcteur DSC possédant :
- une première entrée E1 pour recevoir chaque distance calculée courante PHL,
- une deuxième entrée E2 connectée à la sortie du moyen RMIN par l'intermédiaire d'un premier moyen de retard MR,
- une troisième entrée E3 connectée à la sortie d'un filtre de boucle PLLF par un deuxième moyen de retard qui peut être incorporé dans la structure même du filtre de boucle de structure classique et connue en soi.

Le moyen correcteur DSC comporte une sortie S délivrant une distance corrigée courante PHLd qui est élaborée à partir de la distance calculée courante PHL, de l'erreur de comparaison Dif relative à la distance calculée précédente et de l'erreur de comparaison filtrée PHe.

Dans le cas présent, les distances calculées courantes PHL sont négatives et les valeurs de référence contenues dans la mémoire TAB sont positives. C'est la raison pour laquelle on a représenté un signe + sur l'entrée E1 du moyen DSC qui reçoit la distance PHL négative. La distance corrigée courante PHLd correspondant à la distance calculée courante PHL reçue par le moyen DSC, est par conséquent négative.

L'additionneur M1 effectue donc la différence entre cette distance corrigée courante PHLd et chacune des valeurs de référence stockées dans la mémoire TAB. Le résultat est un jeu de quinze valeurs que les moyens RMIN comparent avec la plage de référence précédemment mentionnée.

Les moyens RMIN sélectionnent alors la différence minimale Dif comprise dans ladite plage de comparaison prédéterminée ]-0,5T, +0,5T[. Cette différence minimale Dif est alors associée à l'une des valeurs de référence stockées dans la mémoire TAB et donc à l'un des multiples entiers de la distance de base 1T. Si, par exemple, le résultat de la comparaison a permis de mettre en évidence que c'est la valeur de référence 10T qui a conduit à la différence minimale, les moyens d'élaboration MT vont alors en déduire que la distance calculée courante PHL délivrée à l'entrée de la boucle correspond en fait à une longueur 10T. Ils vont donc délivrer en sortie de la boucle une information logique LL correspondant au nombre 10, ce qui va être interprété par des moyens de décodage postérieurs, non représentés ici à des fins de simplification, comme signifiant l'obtention de neuf zéros encadrés par deux "1".

Parallèlement, afin de permettre le verrouillage permanent de la boucle, la différence minimale Dif sera d'une part directement prise en compte dans le moyen correcteur DSC lors de la délivrance de la distance calculée courante suivante (présence du moyen de retard MR). Ceci permet donc d'effectuer une correction très rapide du déphasage éventuel. Par ailleurs, une correction lente du déphasage est obtenue par les coefficients du filtre de boucle PLLF qui est un filtre récursif à réponse impulsionnelle finie de structure classique et bien connue de l'homme du métier. Là encore, cette erreur filtrée PHe sera prise en compte pour la distance calculée courante PHL suivante par l'intermédiaire du moyen de retard qui est généralement incorporé dans la structure du filtre.

Il convient de noter que si les moyens RMIN sélectionnent comme valeur de référence ayant conduit à une différence minimale, les valeurs de référence 0T, 1T ou 2T, ceci est considéré comme une anomalie et on considèrera que la distance calculée courante est en fait une distance 3T et l'on corrigera immédiatement en conséquence l'érreur de déphasage. Il en est de même si l'une des valeurs de référence sélectionnée est la valeur 12 ou 13T. On considèrera alors qu'il s'agit d'une valeur 11T.

L'homme du métier aura noté que les moyens DSC, RMIN, PLLF, MR notamment, forment une boucle numérique principale à verrouillage de phase cadencé au rythme des transitions TR détectées et qui permet ainsi une correction rapide d'un éventuel déphasage par l'intermédiaire du rebouclage direct de la valeur Dif et une correction lente par l'intermédiaire d'un filtre de boucle dont les coefficients sont indépendants de la vitesse de rotation du disque.

Les moyens d'extraction MXT comportent par ailleurs avantageusement des moyens de contrôle BCC qui se comportent également comme une boucle de contrôle numérique, et qui vont permettre de contrôler le bon verrouillage de la boucle numérique principale et également d'affiner l'estimation de la distance de base 1T, en utilisant cette fois-ci la distance séparant deux impulsions de synchronisation du signal incident.

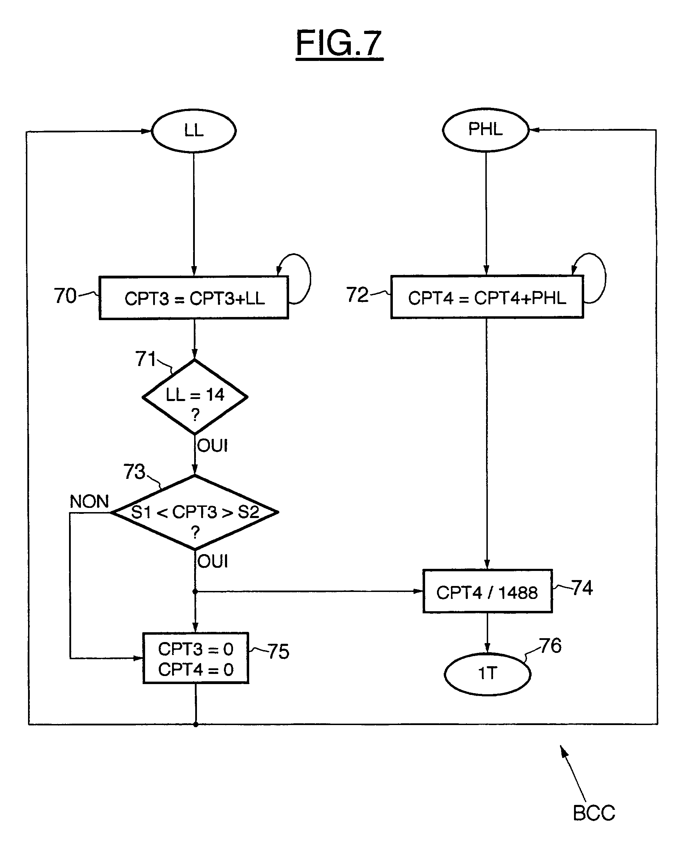

On se réfère maintenant plus particulièrement à la figure 7 pour décrire un mode de fonctionnement de ces moyens de contrôle BCC.

Ceux-ci comportent un compteur CPT3 et un compteur CPT4. Le compteur CPT3 est destiné à sommer les valeurs des différentes valeurs (multiples) LL correspondant aux différentes distances courantes calculées PHL.

Le compteur CPT4 est destiné quant à lui à sommer les distances calculées courantes PHL intervenant entre deux occurences successives d'impulsion de synchronisation.

Plus précisément, on suppose dans l'étape 75 qu'une impulsion de synchronisation (14T) a été détectée, ce qui a eu pour conséquence de remettre à zéro les compteurs CPT3 et CPT4.

Dans l'étape 70, le compteur CPT3 va donc sommer tous les multiples LL délivrés par les moyens de traitement jusque y compris le prochain multiple LL égal à 14. De même, parallèlement, le compteur CPT4 va sommer toutes les distances PHL correspondant à ces différents multiples (étape 72).

Lorsque l'impulsion de synchronisation suivante a été détectée (étape 71), on va comparer le contenu du compteur CPT3 à deux seuils prédéterminés S1 et S2 (étape 73). Si le compteur CPT3 se situe entre ces deux seuils, on va alors diviser (étape 74) le contenu du compteur CPT4 par 1488, de façon à obtenir (étape 76) une nouvelle estimation de la période 1T.

On remet alors les compteurs CPT3 et CPT4 à zéro et le cycle recommence jusqu'à l'impulsion de synchronisation suivante.

L'homme du métier remarque donc que cette boucle de correction permet, d'une part, de fournir éventuellement une nouvelle estimation de la valeur de la distance de base 1T, cette fois-ci à partir des distances cumulées entre deux impulsions de synchronisation. Par ailleurs, elle permet de fournir un signal logique de bon verrouillage de la boucle de correction principale des moyens d'extraction de données MXT, et ce, dans le cas où le compteur CPT3 se situe effectivement entre les deux seuils, ces deux seuils pouvant être choisis légèrement inférieurs et légèrement supérieurs à 1488. Par contre, dans le cas où la valeur du compteur CPT3 ne se situe pas entre ces deux seuils, cela signifie que la boucle principale de correction n'est pas correctement verrouillée. Dans ce cas, on peut émettre un signal logique de non verrouillage NL (figure 4) dont l'utilisation sera décidée à un niveau système supérieur.

A cet égard, les moyens de commande MPR de niveau supérieur pourront, soit décider d'attendre une nouvelle estimation de la période 1T à partir des impulsions de synchronisation, soit réactiver les moyens de prétraitement FSL pour réestimer une valeur de la période 1T. Matériellement, la boucle numérique de contrôle peut, de la même façon que les moyens de prétraitement, être réalisée au moins partiellement à partir d'outils de synthèse logique. Il en est de même pour la boucle numérique principale.

Bien entendu, tout ce qui vient d'être décrit pour un disque DVD s'applique également notamment à un disque CD-ROM. L'homme du métier saura ajuster alors les différentes valeurs des distance-seuils ainsi que les différentes valeurs des seuils S1 et S2 en fonction des caractéristiques du codage des données sur le support d'informations utilisé. A titre indicatif on rappelle que dans le cas d'un CD-ROM par exemple, les impulsions de synchronisation ont des longueurs de 11T et sont séparées par une distance de 588T au lieu de 1488T dans un DVD.

## Revendications

1. Procédé d'extraction de données binaires véhiculées par un signal incident, lesdites données binaires étant codées sous la forme d'un signal impulsionnel (SMP) dont les impulsions ont des longueurs variables et toutes multiples d'une longueur impulsionnelle de base (1T), et le signal incident (HFS) comportant une succession de transitions (TR) dont les espacements (PHL) sont représentatifs des longueurs desdites impulsions, dans lequel on détecte les transitions (TR) du signal incident, on calcule les distances (PHL) séparant les transitions successives, et on détermine les valeurs des données à partir des distances calculées, **caractérisé par le fait qu'**il comprend une phase d'initialisation (50-59) dans laquelle on détermine à partir du contenu du signal incident la valeur d'une distance de base (1T) correspondant à ladite longueur impulsionnelle de base (1T), et une phase d'extraction dans laquelle on élabore un jeu de valeurs de référence (1T-14T) correspondant respectivement à différents multiples de la distance de base déterminée, et pour une distance courante calculée (PHL), on détermine les valeurs des données correspondant à cette distance courante à partir d'une comparaison entre les valeurs de référence et une distance corrigée courante (PHLd) élaborée à partir de la distance calculée courante (PHL), d'une erreur de comparaison (Dif) relative à la distance calculée précédente et de l'erreur de comparaison filtrée (PHe).

2. Procédé selon la revendication 1, **caractérisé par le fait que** la phase d'initialisation comprend au moins une première sous-phase (50-59) comportant l'élaboration d'au moins une première distance-seuil (TH3T) élaborée à partir de la distance calculée maximale courante et correspondant à une première longueur-seuil située entre un premier (3T) et un deuxième (4T) multiples successifs de la longueur de base, la comparaison de chaque distance calculée courante (PHL) avec ladite première distance-seuil, la sommation d'un premier nombre prédéterminé (21) de valeurs de distances calculées courantes inférieures à ladite première distance-seuil, et la division de la somme obtenue par un premier diviseur prédéterminé (64) de façon à obtenir une valeur estimée de ladite distance de base (1T).

3. Procédé selon la revendication 2, **caractérisé par le fait que** la phase d'initialisation comprend une deuxième sous-phase (60-67), postérieure à la première sous-phase, dans laquelle on élabore à partir de la valeur de la distance de base obtenue à l'issue de la première sous-phase, une deuxième distance-seuil (TH4Tb) et une troisième distance-seuil (TH4Tt) supérieure à la deuxième distance-seuil, les deuxième et troisième distance-seuils correspondant respectivement à une première et une deuxième longueur-seuils encadrant ledit deuxième multiple (4T) de la longueur de base, la comparaison de chaque distance calculée courante avec ladite deuxième distance-seuil et avec la troisième distance-seuil, la sommation d'un deuxième nombre prédéterminé (32) de valeurs de distances calculées courantes comprises entre ladite deuxième distance-seuil et ladite troisième distance-seuil, et la division de la somme obtenue par un deuxième diviseur prédéterminé (128) de façon à obtenir une nouvelle valeur de ladite distance de base.

4. Procédé selon l'une des revendications précédentes, **caractérisé par le fait que** dans la phase d'extraction, les valeurs de référence comportent respectivement tous les multiples entiers de la distance de base déterminée (1T) compris entre la distance de base (1T) et le multiple maximum (14T) de cette distance de base correspondant au multiple maximum de la longueur de base susceptible d'être contenu dans le signal incident, **par le fait qu'**on effectue la différence entre la distance corrigée courante et des valeurs de référence et on sélectionne la différence minimale (Dif) comprise dans une plage de comparaison prédéterminée, la longueur (LL) de l'impulsion codant les valeurs des données correspondant à la distance calculée courante, étant alors le multiple (LL)de la longueur de base associé à la valeur de référence ayant conduit à ladite différence minimale sélectionnée.

5. Procédé selon l'une des revendications précédentes, **caractérisé par le fait que** le signal impulsionnel comporte des impulsions de synchronisation (PS) dont les occurences sont mutuellement espacés d'une longueur de synchronisation égale à un quatrième multiple prédéterminé (1488) de la longueur de base, deux impulsions de synchronisation encadrant un flot d'impulsions de longueurs variables codant un flot de données, **par le fait que** dans la phase d'extraction, on effectue un contrôle de la valeur de la distance de base à partir de la détection des impulsions de synchronisation successives (PS) et du contenu du signal incident situé entre deux occurences successives d'une impulsion de synchronisation.

6. Procédé selon la revendication 5, **caractérisé par le fait qu'**on détecte les distances calculées correspondant aux impulsions de synchronisation, on effectue la somme des multiples (RLL) correspondant aux distances calculées délivrées depuis l'occurence d'une impulsion de synchronisation jusqu'à l'occurence de l'impulsion de synchronisation suivante, et si cette somme se situe dans un voisinage prédéterminé (S1, S2) dudit quatrième multiple (1488), on divise la somme des distances calculées ayant été délivrées entre les deux occurences, par ledit quatrième multiple de façon à obtenir une nouvelle valeur de la distance de base.

7. Dispositif d'extraction de données binaires véhiculées par un signal incident, lesdites données binaires étant codées sous la forme d'un signal impulsionnel dont les impulsions ont des longueurs variables et toutes multiples d'une longueur impulsionnelle de base, et le signal incident (HFS) comportant une succession de transitions dont les espacements sont représentatifs des longueurs desdites impulsions, le dispositif comprenant une entrée pour recevoir le signal incident (HFS), des moyens de détection (PMC) aptes à détecter les transitions du signal incident, des moyens de calcul aptes à calculer les distances séparant les transitions successives, et des moyens de traitement aptes à déterminer les valeurs des données à partir des distances calculées, **caractérisé par le fait que** les moyens de traitement comprennent
des moyens de prétraitement (FSL) aptes à déterminer à partir du contenu du signal incident la valeur d'une distance de base correspondant à ladite longueur impulsionnelle de base et à stocker cette valeur dans un registre,
des moyens d'extraction (MXT) comportant des moyens d'élaboration d'un jeu de valeurs de référence correspondant respectivement à différents multiples de la distance de base stockée dans le registre, et des moyens formant boucle de correction aptes pour une distance courante calculée (PHL), à déterminer les valeurs des données correspondant à cette distance courante à partir d'une comparaison entre les valeurs de référence et une distance corrigée courante (PHLd) élaborée à partir de la distance calculée courante (PHL), d'une erreur de comparaison (Dif) relative à la distance calculée précédente et de l'erreur de comparaison filtrée (PHe), et
des moyens de commande (MPR) aptes à activer les moyens de prétraitement (FSL) puis les moyens d'extraction (MXT).

8. Dispositif selon la revendication 7, **caractérisé par le fait que** la boucle de correction comporte
un premier moyen (M1) apte à effectuer la différence entre la distance corrigée courante et chacune des valeurs de référence,
un deuxième moyen (RMIN) apte à sélectionner la différence minimale comprise dans une plage de comparaison prédéterminée,
un filtre (PLLF) connecté à la sortie du deuxième moyen,
un moyen correcteur (DSC) possédant une première entrée pour recevoir chaque distance calculée courante, une deuxième entrée connectée à la sortie du deuxième moyen par l'intermédiaire d'un premier moyen de retard, une troisième entrée connectée à la sortie du filtre par un deuxième moyen de retard, et une sortie connectée à une entrée du premier moyen et délivrant ladite distance corrigée courante égale à la somme de la distance calculée courante et de ladite différence minimale diminuée de la valeur de sortie délivrée par le filtre,
et **par le fait que** la boucle de correction est cadencée au rythme des transitions (TR) du signal incident.

9. Dispositif selon la revendication 8, **caractérisé par le fait que** le signal impulsionnel comporte des impulsions de synchronisation (PS) dont les occurences sont mutuellement espacés d'une longueur de synchronisation égale à un multiple prédéterminé de la longueur de base, deux impulsions de synchronisation encadrant un flot d'impulsions de longueurs variables codant un flot de données, et **par le fait que** les moyens d'extraction comportent des moyens de contrôle (BCC) aptes à contrôler la valeur de la distance de base à partir de la détection des impulsions de synchronisation successives et du contenu du signal incident situé entre deux occurences successives d'une impulsion de synchronisation.

10. Dispositif selon l'une des revendications précédentes,
**caractérisé par le fait que** les-moyens de prétraitement (FSL) comportent des moyens d'élaboration aptes à élaborer au moins une première distance-seuil à partir de la distance calculée maximale courante et correspondant à une première longueur-seuil située entre un premier et un deuxième multiples successifs de la longueur de base, des moyens de comparaison aptes à comparer chaque distance calculée courante avec ladite première distance-seuil, des moyens de sommation aptes à sommer un premier nombre prédéterminé de valeurs de distances calculées courantes inférieures à ladite première distance-seuil, et un moyen diviseur apte à diviser la somme obtenue par un premier diviseur prédéterminé de façon à obtenir une valeur de ladite distance de base.

11. Lecteur de disque numérique, en particulier de disque DVD, **caractérisé par le fait qu'**il comprend un dispositif tel que défini dans l'une des revendications 7 à 10.

## Claims

1. Process for extracting binary data conveyed by an incident signal, the said binary data being coded in the form of a pulsatile signal (SMP) whose pulses have variable lengths which are all multiples of a base pulse length (1T), and the incident signal (HFS) comprising a succession of transitions (TR) whose spacings (PHL) are representative of the lengths of the said pulses, in which process the transitions (TR) of the incident signal are detected, the distances (PHL) separating the successive transitions are calculated, and the values of the data are determined from the calculated distances, **characterized in that** it comprises an initialization phase (50-59) in which the value of a base distance (1T) corresponding to the said base pulse length (1T) is determined from the content of the incident signal, and an extraction phase in which a set of reference values (1T-14T) corresponding respectively to various multiples of the determined base distance is formulated, and for a calculated current distance (PHL), the values of the data corresponding to this current distance are determined from a comparison between the reference values and a current corrected distance (PHLd) formulated from the current calculated distance (PHL), from a comparison error (Dif) relating to the previous calculated distance and from the filtered comparison error (PHe).

2. Process according to Claim 1, **characterized in that** the initialization phase comprises at least one first subphase (50-59) comprising the formulation of at least one first threshold distance (TH3T) formulated from the current maximum calculated distance and corresponding to a first threshold length situated between a first (3T) and a second (4T) successive multiples of the base length, the comparison of each current calculated distance (PHL) with the said first threshold distance, the summation of a first predetermined number (21) of values of current calculated distances less than the said first threshold distance, and the dividing of the sum obtained by a first predetermined divisor (64) so as to obtain an estimated value of the said base distance (1T).

3. Process according to Claim 2, **characterized in that** the initialization phase comprises a second subphase (60-67), subsequent to the first subphase, in which a second threshold distance (TH4Tb) and a third threshold distance (TH4Tt) greater than the second threshold distance are formulated from the value of the base distance obtained on completing the first subphase, the second and third threshold distances corresponding respectively to a first and a second threshold length flanking the said second multiple (4T) of the base length, the comparison of each current calculated distance with the said second threshold distance and with the third threshold distance, the summation of a second predetermined number (32) of values of current calculated distances lying between the said second threshold distance and the said third threshold distance, and the dividing of the sum obtained by a second predetermined divisor (128) so as to obtain a new value of the said base distance.

4. Process according to one of the preceding claims, **characterized in that** in the extraction phase, the reference values respectively comprise all the integer multiples of the determined base distance (1T) lying between the base distance (1T) and the maximum multiple (14T) of this base distance corresponding to the maximum multiple of the base length which can be contained in the incident signal, **in that** the difference between the current corrected distance and reference values is established and the minimum difference (Dif) lying within a predetermined comparison range is selected, the length (LL) of the pulse coding the values of the data corresponding to the current calculated distance, then being that multiple (LL) of the base length associated with the reference value having led to the said selected minimum difference.

5. Process according to one of the preceding claims, **characterized in that** the pulsatile signal comprises synchronization pulses (PS) whose occurrences are mutually spaced by a synchronization length equal to a fourth predetermined multiple (1488) of the base length, two synchronization pulses flanking a stream of variable length pulses coding a data stream, **in that** in the extraction phase, a check of the value of the base distance is performed on the basis of the detection of the successive synchronization pulses (PS) and of the content of the incident signal situated between two successive occurrences of a synchronization pulse.

6. Process according to Claim 5, **characterized in that** the calculated distances corresponding to the synchronization pulses are detected, the sum is established of the multiples (RLL) corresponding to the calculated distances delivered since the occurrence of a synchronization pulse up to the occurrence of the next synchronization pulse, and if this sum lies within a predetermined neighbourhood (S1, S2) of the said fourth multiple (1488), the sum of the calculated distances which have been delivered between the two occurrences is divided by the said fourth multiple so as to obtain a new value of the base distance.

7. Device for extracting binary data conveyed by an incident signal, the said binary data being coded in the form of a pulsatile signal whose pulses have variable lengths which are all multiples of a base pulse length, and the incident signal (HFS) comprising a succession of transitions whose spacings are representative of the lengths of the said pulses, the device comprising an input for receiving the incident signal (HFS), detection means (PMC) able to detect the transitions of the incident signal, calculation means able to calculate the distances separating the successive transitions, and processing means able to determine the values of the data from the calculated distances, **characterized in that** the processing means comprise
preprocessing means (FSL) able to determine from the content of the incident signal the value of a base distance corresponding to the said base pulse length and to store this value in a register,
extraction means (MXT) comprising means for formulating a set of reference values corresponding respectively to various multiples of the base distance stored in the register and means forming a correction loop able for a calculated current distance (PHL), to determine the values of the data corresponding to this current distance from a comparison between the reference values and a current corrected distance (PHLd) formulated from the current calculated distance (PHL), from a comparison error (Dif) relating to the previous calculated distance and from the filtered comparison error (PHe), and
control means (MPR) able to activate the preprocessing means (FSL) and then the extraction means (MXT).

8. Device according to Claim 7, **characterized in that** the correction loop comprises
a first means (Ml) able to establish the difference between the current corrected distance and each of the reference values,
a second means (RMIN) able to select the minimum difference lying in a predetermined comparison range,
a filter (PLLF) connected to the output of the second means,
a corrector means (DSC) possessing a first input for receiving each current calculated distance, a second input connected to the output of the second means by way of a first delay means, a third input connected to the output of the filter by a second delay means, and an output connected to an input of the first means and delivering the said current corrected distance equal to the sum of the current calculated distance and of the said minimum difference minus the value of the output delivered by the filter,
and **in that** the correction loop is regulated in tempo with the transitions (TR) of the incident signal.

9. Device according to Claim 8, **characterized in that** the pulsatile signal comprises synchronization pulses (PS) whose occurrences are mutually spaced by a synchronization length equal to a predetermined multiple of the base length, two synchronization pulses flanking a stream of variable length pulses coding a data stream and **in that** the extraction means comprise checking means (BCC) able to check the value of the base distance on the basis of the detection of the successive synchronization pulses and of the content of the incident signal situated between two successive occurrences of a synchronization pulse.

10. Device according to one of the preceding claims, **characterized in that** the preprocessing means (FSL) comprise formulation means able to formulate at least one first threshold distance from the current maximum calculated distance corresponding to a first threshold length situated between a first and a second successive multiples of the base length, comparison means able to compare each current calculated distance with the said first threshold distance, summation means able to sum a first predetermined number of values of current calculated distances less than the said first threshold distance, and a divisor means able to divide the sum obtained by a first predetermined divisor so as to obtain a value of the said base distance.

11. Reader for digital disk, in particular for DVD disk, **characterized in that** it comprises a device as defined in one of Claims 7 to 10.

## Patentansprüche

1. Verfahren zur Extrahierung von binären Daten aus einem Eingangssignal, wobei die binären Daten in Form eines Impulssignals (SMP) kodiert sind, dessen Impulse variable Längen und alle Vielfache einer Impuls-Basislänge (1T) haben, und wobei das Eingangssignal (HFS) eine Folge von Übergängen (TR) aufweist, deren Abstände (PHL) repräsentativ für die Längen der Impulse sind, in welchem Verfahren die Übergänge (TR) des Eingangssignals detektiert werden, die Abstände (PHL), die die aufeinanderfolgenden Übergänge voneinander separieren, berechnet werden und ausgehend von den berechneten Abständen die Werte der Daten ermittelt werden,
**dadurch gekennzeichnet, daß** es aufweist:
eine Initialisierungsphase (50-59), in welcher ausgehend von dem Inhalt des Eingangssignals der Wert eines Basisabstands (1T), der der Impuls-Basislänge (1T) entspricht, ermittelt wird, und
eine Extrahierungsphase, in welcher ein Satz von Referenzwerten (1T-14T), die jeweils verschiedenen Vielfachen des ermittelten Basisabstands entsprechen, ausgearbeitet wird und für einen berechneten aktuellen Abstand (PHL) die Werte der Daten, die diesem aktuellen Abstand entsprechen, ermittelt werden, und zwar ausgehend von einem Vergleich zwischen den Referenzwerten und einem korrigierten aktuellen Abstand (PHLd), der aus dem berechneten aktuellen Abstand (PHL), einem Vergleichsfehler (Dif) bezüglich des vorausgehenden berechneten Abstands und dem gefilterten Vergleichsfehler (PHe) ausgearbeitet wird.

2. Verfahren nach Anspruch 1, **dadurch gekennzeichnet, daß** die Initialisierungsphase mindestens eine erste Unterphase (50-59) aufweist, die aufweist:
die Ausarbeitung mindestens einer ersten Abstandsschwelle (TH3T), die ausgehend von dem berechneten maximalen aktuellen Abstand ausgearbeitet wird und einer ersten Längenschwelle entspricht, die zwischen einem ersten (3T) und einem zweiten (4T) darauffolgenden Vielfachen der Basislänge liegt,
den Vergleich jedes berechneten aktuellen Abstands (PHL) mit der ersten Abstandsschwelle,
die Addition einer ersten vorgegebenen Anzahl (21) von berechneten aktuellen Abstandswerten, die unterhalb der ersten Abstandsschwelle liegen, und
die Division der gewonnenen Summe durch einen vorgegebenen ersten Divisor (64), um einen geschätzten Wert des Basisabstands (1T) zu gewinnen.

3. Verfahren nach Anspruch 2, **dadurch gekennzeichnet, daß** die Initialisierungsphase nach der ersten Unterphase eine zweite Unterphase (60-67) aufweist, die aufweist:
die Ausarbeitung einer zweiten Abstandsschwelle (TH4Tb) und einer oberhalb der zweiten Abstandsschwelle liegenden dritten Abstandsschwelle (TH4Tt) ausgehend von dem als Ergebnis der erste Unterphase gewonnenen Wert des Basisabstands, wobei die erste und zweite Abstandsschwelle jeweils einer ersten und zweiten Längenschwelle entsprechen, die das zweite Vielfache (4T) der Basislänge umrahmen,
den Vergleich jedes berechneten aktuellen Abstands mit der zweiten Abstandsschwelle und mit der dritten Abstandsschwelle,
die Addition einer vorgegebenen zweiten Anzahl (32) von berechneten aktuellen Abstandswerten, die zwischen der zweiten Abstandsschwelle und der dritten Abstandsschwelle liegen, und
die Division der gewonnenen Summe durch einen vorgegebenen zweiten Divisor (128), um einen neuen Wert des Basisabstands zu gewinnen.

4. Verfahren nach einem der vorstehenden Ansprüche, **dadurch gekennzeichnet, daß**
in der Extrahierungsphase die Referenzwerte jeweils alle ganzzahligen Vielfachen des ermittelten Basisabstands (1T) aufweisen, die zwischen dem Basisabstand (1T) und dem maximalen Vielfachen (14T) dieses Basisabstands liegen, das dem maximalen Vielfachen der Basislänge entspricht, das in dem Eingangssignal enthalten sein kann,
**dadurch**, daß die Differenz zwischen dem korrigierten aktuellen Abstand und den Referenzwerten gebildet wird und die minimale Differenz (Dif), die in einem vorgegebenen Vergleichsbereich liegt, gewählt wird, wobei die Länge (LL) des die Werte der Daten kodierenden Impulses, die dem berechneten aktuellen Abstand entspricht, somit das Vielfache (LL) der Basislänge ist, die mit dem Referenzwert verknüpft ist, der zu der minimalen gewählten Differenz geführt hat.

5. Verfahren nach einem der vorstehenden Ansprüche, **dadurch gekennzeichnet, daß**
das Impulssignal Synchronisationsimpulse (PS) aufweist, die eine Synchronisationslänge voneinander beabstandet erscheinen, die gleich einem vorgegebenen vierten Vielfachen (1488) der Basislänge ist, wobei zwei Synchronisationsimpulse einen Fluß von Impulsen variabler Länge, der einen Datenfluß kodiert, einrahmen,
**dadurch**, daß in der Extrahierungsphase eine Prüfung des Werts des Basisabstands erfolgt, und zwar ausgehend von der Detektion von aufeinanderfolgenden Synchronisationsimpulsen (PS) und dem Inhalt des Eingangssignals, der zwischen zwei aufeinanderfolgend erscheinenden Synchronisationsimpulsen liegt.

6. Verfahren nach Anspruch 5, **dadurch gekennzeichnet, daß** die berechneten Abstände, die den Synchronisationsimpulsen entsprechen, detektiert werden, die Summe der Vielfachen (RLL), die den berechneten Abständen entsprechen, die von dem Erscheinen eines Synchronisationsimpulses bis zu dem Erscheinen des nächsten Synchronisationsimpulses ausgegeben werden, gebildet wird und, falls diese Summe in der vorgegebenen Nähe (S1,S2) des vierten Vielfachen (1488) liegt, die Summe der berechneten Abstände, die zwischen dem Erscheinen des einen und dem Erscheinen des nächsten Synchronisationsimpulses ausgegeben worden sind, durch das vierte Vielfache dividiert wird, um einen neuen Wert des Basisabstands zu gewinnen.

7. Vorrichtung zur Extrahierung von binären Daten aus einem Eingangssignal, wobei die binären Daten in Form eines Impulssignals kodiert sind, dessen Impulse variable Längen und alle Vielfache einer Impuls-Basislänge haben, und wobei das Eingangssignal (HFS) eine Folge von Übergängen aufweist, deren Abstände repräsentativ für die Längen der Impulse sind, wobei die Vorrichtung aufweist:
einen Eingang zum Empfangen des Eingangssignals (HFS),
Detektionseinrichtungen (PMC), die in der Lage sind, die Übergänge des Eingangssignals zu detektieren,
Berechnungseinrichtungen, die in der Lage sind, die Abstände, die die aufeinanderfolgenden Übergänge separieren, zu berechnen, und
Verarbeitungseinrichtungen, die in der Lage sind, ausgehend von den berechneten Abständen die Werte der Daten zu ermitteln,
**dadurch gekennzeichnet, daß** die Verarbeitungseinrichtungen aufweisen:
Vorverarbeitungseinrichtungen (FSL), die in der Lage sind, ausgehend von dem Inhalt des Eingangssignals den Wert eines Basisabstands, der der Impuls-Basislänge entspricht, zu ermitteln und diesen Wert in einem Register zu speichern,
Extrahierungseinrichtungen (MXT), die aufweisen: Ausarbeitungseinrichtungen zum Ausarbeiten eines Satzes von Referenzwerten, die jeweils verschiedenen Vielfachen des in dem Register gespeicherten Basisabstands entsprechen, und Einrichtungen, die eine Korrekturschleife bilden und in der Lage sind, für einen aktuellen berechneten Abstand (PHL) die diesem aktuellen Abstand entsprechenden Werte der Daten zu ermitteln, und zwar ausgehend von einem Vergleich zwischen den Referenzwerten und einem korrigierten aktuellen Abstand (PHLd), der aus dem berechneten aktuellen Abstand (PHL), einem Vergleichsfehler (Dif) bezüglich des berechneten vorausgehenden Abstands und dem gefilterten Vergleichsfehler (PHe) ausgearbeitet wird, und
Steuereinrichtungen (MPR), die in der Lage sind, die Vorverarbeitungseinrichtungen (FSL), dann die Extrahierungseinrichtungen (MXT) zu aktivieren.

8. Vorrichtung nach Anspruch 7, **dadurch gekennzeichnet, daß** die Korrekturschleife aufweist:
eine erste Einrichtung (M1), die in der Lage ist, die Differenz zwischen dem korrigierten aktuellen Abstand und jedem Referenzwert zu bilden,
eine zweite Einrichtung (RMIN), die in der Lage ist, die minimale Differenz, die in einem vorgegebenen Vergleichsbereich liegt, zu wählen,
ein Filter (PLLF), das mit dem Ausgang der zweiten Einrichtung verbunden ist,
eine Korrektureinrichtung (DSC), die einen ersten Eingang zum Empfangen jedes berechneten aktuellen Abstands, einen über eine erste Verzögerungseinrichtung mit dem Ausgang der zweiten Einrichtung verbundenen zweiten Eingang, einen über eine zweite Verzögerungseinrichtung mit dem Ausgang des Filters verbundenen dritten Eingang und einen mit einem Eingang der ersten Einrichtung verbundenen Ausgang aufweist, der den korrigierten aktuellen Abstand ausgibt, der gleich der Summe aus dem berechneten aktuellen Abstand und der minimalen Differenz, verringert um den von dem Filter ausgegebenen Ausgabewert, ist, und
**dadurch**, daß die Korrekturschleife im Takt der Übergänge (TR) des Eingangssignals getaktet ist.

9. Vorrichtung nach Anspruch 8, **dadurch gekennzeichnet, daß** das Impulssignal Synchronisationsimpulse (PS) aufweist, die eine Synchronisationslänge voneinander beabstandet erscheinen, die gleich einem vorgegebenen vierten Vielfachen der Basislänge ist, wobei zwei Synchronisationsimpulse einen Fluß von Impulsen variabler Länge, der einen Datenfluß kodiert, einrahmen, und
**dadurch**, daß die Extrahierungseinrichtungen Prüfeinrichtungen (BCC) aufweisen, die in der Lage sind, den Wert des Basisabstands zu überprüfen, und zwar ausgehend von der Detektion von aufeinanderfolgenden Synchronisationsimpulsen (PS) und dem Inhalt des Eingangssignals, der zwischen zwei aufeinanderfolgend erscheinenden Synchronisationsimpulsen liegt.

10. Vorrichtung nach einem der vorstehenden Ansprüche, **dadurch gekennzeichnet, daß** die Vorverarbeitungseinrichtungen (FSL) aufweisen:
Ausarbeitungseinrichtungen, die in der Lage sind, ausgehend von dem berechneten maximalen aktuellen Abstand mindestens eine erste Abstandsschwelle auszuarbeiten, die einer ersten Längenschwelle entspricht, die zwischen einem ersten und einem darauffolgenden zweiten Vielfachen der Basislänge liegt,
Vergleichseinrichtungen, die in der Lage sind, jeden berechneten aktuellen Abstand mit der ersten Abstandsschwelle zu vergleichen,
Additionseinrichtungen, die in der Lage sind, eine erste vorgegebene Anzahl von berechneten aktuellen Abstandswerten, die unterhalb der ersten Abstandsschwelle liegen, zu addieren, und
eine Divisionseinrichtung, die in der Lage ist, die gewonnene Summe durch einen vorgegebenen ersten Divisor zu dividieren, um einen Wert des Basisabstands zu gewinnen.

11. Leser für eine digitale Platte, insbesondere für eine DVD, **dadurch gekennzeichnet, daß** er eine Vorrichtung aufweist, wie sie in einem der Ansprüche 7 bis 10 definiert ist.
